**Europäisches Patentamt**

(19) **European Patent Office**

**Office européen des brevets**

(11) Numéro de publication: **0 005 095**

**B1**

(12) **FASCICULE DE BREVET EUROPEEN**

(45) Date de publication du fascicule du brevet: **27.01.82** (51) Int. Cl.³: **B 62 D 35/00**

(21) Numéro de dépôt: **79400215.4**

(22) Date de dépôt: **03.04.79**

(54) **Carénage pour cabine de véhicules lourds de transport.**

(30) Priorité: **07.04.78 FR 7810467**

(43) Date de publication de la demande:
**31.10.79 Bulletin 79/22**

(45) Mention de la délivrance du brevet:
**27.01.82 Bulletin 82/4**

(84) Etats contractants désignés:
**BE CH DE GB IT LU NL SE**

(56) Documents cités:
**DE - A - 2 437 075**
**FR - A - 2 329 500**
**FR - A - 2 274 494**
**FR - A - 2 331 472**
**US - A - 3 929 202**
**US - A - 3 972 556**
**US - A - 4 036 519**

(73) Titulaire: **SOCIETE D'ETUDES ET DE REALISATIONS AUTOMOBILES**
**125, rue de Saussure**
**Paris 17ème (FR)**

(73) Titulaire: **ATELIERS SAINT-CATHERINE**
**Le Moulin d'Epône Route de Rambouillet**
**Epône (Yvelines) (FR)**

(72) Inventeur: **Choulet, Robert**
**7, Résidence Elysée I**
**F-78170 La Celle Saint Cloud (FR)**

(74) Mandataire: **Hagel, Francis**
**Cabinet Robert Bloch 39, avenue de Friedland**
**F-75008 Paris (FR)**

Courier Press, Leamington Spa, England.

Carénage pour cabine de véhicules lourds de transport

La présente invention concerne un carénage supérieur de cabine pour véhicules lourds de transport, tels que camions porteurs et tracteurs.

Dans de nombreux véhicules lourds de transport, la carrosserie de la charge transportée, ou caisse, possède un maître-couple, ou section transversale, sensiblement plus important que celui de la cabine de conduite. De plus, ces cabines et ces caisses ont souvent des formes relativement anguleuses, comme c'est le cas dans les actuels véhicules routiers de transport.

Les angles vifs formés par les surfaces frontales et longitudinales des véhicules engendrent sur les surfaces frontales une pression sensiblement plus importante que celle qui s'exercerait si ces différentes surfaces étaient raccordées par des jonctions progressives. Il en résulte une forte résistance à l'avancement.

Par ailleurs, en présence d'un vent relatif, généralement incliné sur l'axe des véhicules, il apparaît un sillage tourbillonnaire important sur le côté opposé au vent, qui entraîne à son tour une diminution de la pression sur le côté situé dans le lit du vent et sur la face frontale arrière des véhicules. La différence de pression sur les deux surfaces longitudinales latérales induit des courants transversaux supérieurs et inférieurs qui viennent heurter les obstacles non carénés des véhicules, comme les roues, les essieux, les ressorts de suspension et les poutrelles. A cause de ce phénomène et de la diminution de la pression sur la surface frontale arrière, la traînée aérodynamique des véhicules est considérablement augmentée.

On a déjà proposé des déflecteurs d'écoulement d'air pour cabine de véhicules lourds, rigides et ayant un maître-couple inférieur à celui de la carrosserie de la charge transportée, destiné à être fixé sur la cabine pour dévier l'écoulement d'air et éviter que ce dernier ne vienne frapper la surface frontale avant de la carrosserie, et comprenant une partie avant, agencée pour coopérer avec le toit de la cabine, et deux parties arrière latérales (DE—A—2437075).

Cependant, le profil aérodynamique de ces déflecteurs ne permet pas de supprimer toutes les discontinuités de l'écoulement d'air au niveau de la partie supérieure de la cabine, ni de diriger cet écoulement tangentiellement au surfaces longitudinales de la carrosserie pour les angles usuels du vent relatif.

La présente invention vise donc à améliorer l'orientation de l'écoulement d'air autour des véhicules, et concerne, à cet effet, un carénage pour cabine de véhicules lourds ayant un maître-couple inférieur à celui de la carrosserie de la charge transportée, comportant un déflecteur d'écoulement d'air rigide et formé d'une partie avant et de deux parties arrière latérales, caractérisé par le fait qu'il est ouvert vers le haut et qu'il comporte un élément agencé pour coopérer avec le toit de la cabine et raccordé à la partie avant du déflecteur, cet élément comportant des parties latérales, qui ont longitudinalement la forme d'un extrados, et une partie frontale, qui s'étend au moins jusqu'au niveau de l'arête frontale avant du toît de la cabine, aussi bien vers le bas que vers l'avant de la cabine.

Grâce à l'élément raccordé au déflecteur du carénage de l'invention, les tourbillons engendrés d'habitude par les arêtes supérieures de la cabine, et notamment les arêtes latérales, sont en tout ou en partie supprimés, permettant ainsi au déflecteur d'assurer sa fonction de guide d'écoulement d'air dans les meilleures conditions d'efficacité. Par rapport aux dispositifs classiques, le carénage de l'invention procure une diminution de la traînée bien supérieure et, en particulier, en cas de fort vent transversal.

Dans une forme de realisation préférée du carénage de l'invention, la partie frontale du dit élément prolonge tangentiellement la surface frontale avant de la cabine.

En outre chacune des parties longitudinales latérales du dit élément peut avoir un profil frontal sensiblement demi-elliptique.

Le raccordement du dit élément au déflecteur du carénage de l'invention peut avantageusement être progressif, et de préférence, être du type "Karman".

L'invention sera mieux comprise à l'aide de la description suivante de plusieurs formes de réalisation du carénage de l'invention, en référence au dessin annexé, sur lequel:

— la figure 1 représente une vue en perspective d'une première forme de réalisation du carénage de l'invention monté sur un camion porteur.

— la figure 2 représente une vue latérale du carénage de la figure 1.

— la figure 3 représente une demi-vue de dessus du carénage de la figure 1.

— la figure 4 représente une demi-vue frontale du carénage de la figure 1.

— la figure 5 représente une demi-vue de dessus d'une deuxième forme de réalisation du carénage de l'invention.

— la figure 6 représente une vue latérale d'une troisième forme de réalisation du carénage de l'invention, et

— la figure 7 représente une vue en perspective de la forme de réalisation du carénage de la figure 6 perfectionnée.

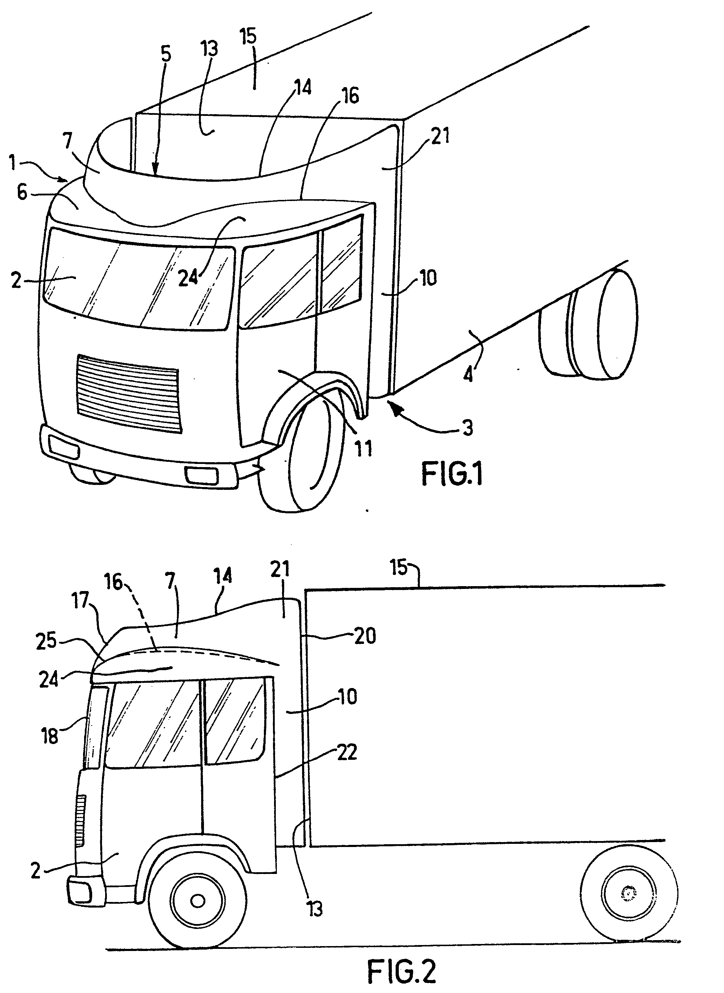

Le carénage 1 de l'invention représenté sur les figures 1 à 4, est très étroitement emboîté sur une cabine 2 d'un camion porteur 3, dont la carrosserie de la charge transportée, ou caisse 4, a un maître-couple, ou section transversale, supérieur à celui de la cabine 2.

Le carénage 1 comprend un déflecteur 5 et un élément 6 raccordés ensemble.

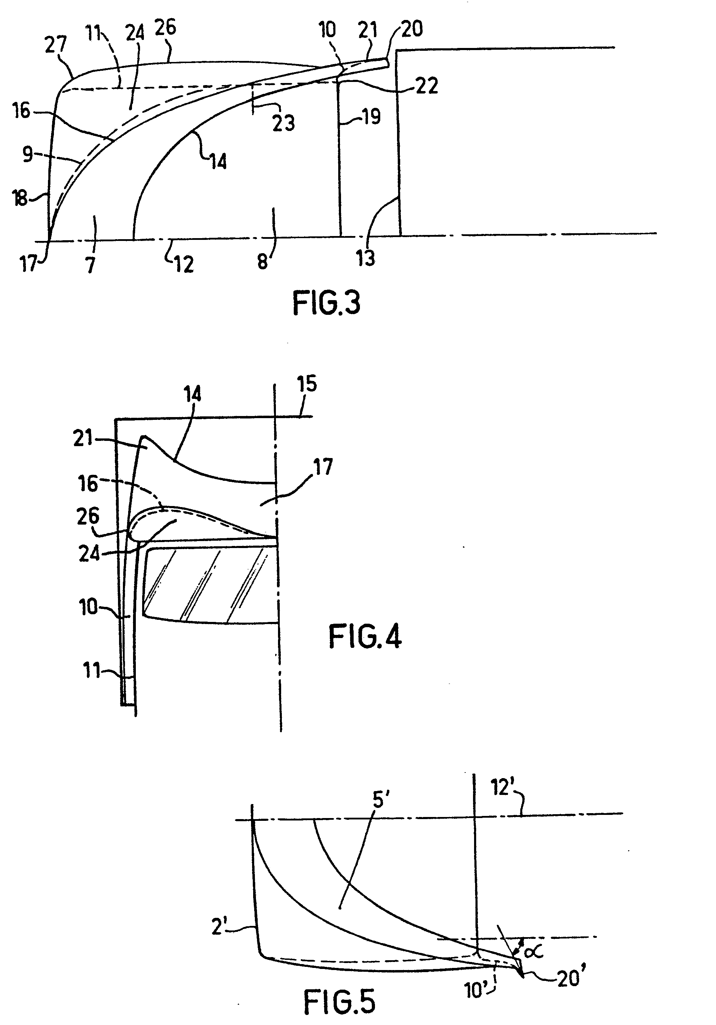

Le déflecteur 5 comprend une partie avant 7, agencée pour coopérer avec le toit 8 de la cabine 2, par son bord inférieur interne 9 (figure 3), et deux parties arrière latérales 10 prolongeant les surfaces latérales 11 de la cabine 2 suivant un gabarit frontal transversal sensiblement égale à celui de la caisse 4. On notera que la partie avant 7 peut ne pas coopérer avec le toît 8 et n'être maintenue que grâce à son raccordement avec l'élément 6 décrit ci-après. La partie avant 7 se prolonge latéralement en 21 jusqu'aux parties arrière 10 suivant un gabarit frontal transversal aussi sensiblement égal à celui de la caisse 4. La hauteur des parties arrière 10 est sensiblement égale à celle de la caisse 4. La partie avant 7 a une forme sensiblement ellipsoïdale dont les sections horizontales sont des ellipses ayant pour axes des droites situées respectivement dans le plan médian 12 du camion 3 et dans la surface frontale 13 de la carrosserie 4. Le bord supérieur 14 de la partie avant 7 du déflecteur 5 s'élève progressivement du milieu vers les côtés et de l'avant vers l'arrière en 21, sensiblement jusqu'au niveau de la surface longitudinale, supérieure 15 de la caisse 4. Le bord inférieur externe 16 de la partie avant 7 qui, comme on le verra plus loin, correspond à la zone de raccordement du déflecteur 5 et de l'élément 6, descend, dans sa partie la plus frontale 17, pratiquement jusqu'au toît 8 de la cabine 2, de manière que cette partie 17 prolonge tangentiellement la surface frontale avant 18 de la cabine 2. Les parties arrière latérales 10 sont raccordées à la face frontale arrière 19 de la cabine 2 suivant une surface appropriée, visible sur la figure 3.

On aurait pu aussi considérer un déflecteur dont la hauteur de la partie avant 7 est sensiblement uniforme, son bord supérieur 14 remontant seulement à l'arrière, en 21.

Pour que le carénage de l'invention puisse être utilisé sur un camion tracteur, la profondeur des parties latérales 10, entre leurs bords de fuite verticaux arrière 20, au demeurant sensiblement parallèles à l'axe du camion, et les pieds arrière 22 de la cabine 2, n'est pas trop grande pour permettre, lors de manoeuvres, un fort débattement de la remorque, ou de la semi-remorque, par rapport au tracteur.

L'élément 6 est composé principalement de deux parties longitudinales latérales 24 ayant, dans le sens longitudinal, sensiblement la forme d'un extrados, de sorte que les parties frontales 25 de ces deux extrados prolongent tangentiellement la surface frontale avant 18 de la cabine 2. Dans le sens latéral, chaque partie 24 de l'élément 6 a une forme sensiblement demi-elliptique et déborde légèrement du toit 8 de la cabine 2, tout en restant dans la largeur hors-tout réglementaire. Les deux parties 24 de l'élément 6 se rejoignent sur le toît 8 de la cabine 2, au niveau de la partie la plus frontale 17 de la partie avant 7 du déflecteur 5. Comme on le voit sur la figure 3, le profil supérieur longitudinal 26 de chaque partie 24 prolonge la surface frontale 18 de la cabine 2 suivant une courbe continue régulière 27.

Le raccordement 16 de l'élément 6 au déflecteur 5 du carénage 1, correspondant au bord inférieur du déflecteur 5 et au bord supérieur de l'élément 6, s'effectue suivant un raccordement progressif du type "Karman", bien connu.

Outre le fait que le carénage 1 de l'invention se présente sous une forme intégrée qui permet sa mise en place simple et rapide, et qu'il comporte des moyens de fixation, comme par exemple des attaches 23, fixés sur le pourtour de la cabine 2, pour le maintenir, répartir harmonieusement les efforts, et protéger ainsi la cabine, le carénage 1 de l'invention présente un très gros avantage, comme on l'explique ci-après.

Le seul déflecteur 5 du carénage 1 de l'invention, s'il était employé seul, réduirait déjà, bien sûr, la traînée aérodynamique du camion 3. Cependant, cette diminution de traînée n'aurait lieu que pour des angles d'attaque du vent relatif compris dans une plage bien déterminée. En effet, la courbe représentative du gain de traînée, obtenu avec le seul déflecteur 5, en fonction de l'angle d'incidence du vent relatif, dont l'ordonnée à l'origine n'est certes pas nulle, passe par un maximum pour une première valeur de cet angle, au demeurant assez faible, avant de s'annuler pour une deuxième valeur de cet angle. La pente négative de cette courbe, au-delà de cette dite première valeur d'angle, est en fait due aux discontinuités de l'écoulement d'air provoquées par les arêtes supérieures de la cabine et au profil aérodynamique de ce déflecteur, insuffisant pour diriger cet écoulement tangentiellement aux surfaces longitudinales de la caisse. Au-delà de la dite deuxième valeur d'angle, le gain de traînée deviendrait négatif, ce qui serait bien entendu préjudiciable à la bonne marche du camion.

L'adjonction au déflecteur 5, de l'élément 6 du carénage 1 de l'invention permet de pallier l'inconvénient ci-dessus. On constate ainsi, avec le carénage de l'invention, que non seulement la valeur du gain de traînée, pour une incidence nulle du vent relatif, est plus importante que celle déjà obtenue avec le seul déflecteur 5, mais encore que la courbe représentative du gain de traînée est tout entière redressée et déplacée vers les gains positifs, par rapport à la première courbe précédemment évoquée, de sorte que plus l'incidence du vent relatif est grande, plus le gain de traînée obtenue est important. C'est parce que le déflecteur 5, grâce à l'élément 6, joue parfaitement son rôle de guide d'écoulement d'air, que l'invention procure un tel résultat.

On notera qu'on peut avantageusement recouvrir les bords longitudinaux (26) des parties longitudinales latérales 24 de l'élément 6 de fuseaux longitudinaux, qui permettent de raccorder mieux encore les extrados avec les surfaces longitudinales latérales 11 de la cabine 2, si cette dernière est particulièrement anguleuse, de manière à repousser davantage le décollement de l'écoulement d'air sur ces bords longitudinaux (26), lorsque l'incidence du vent relatif n'est pas nulle.

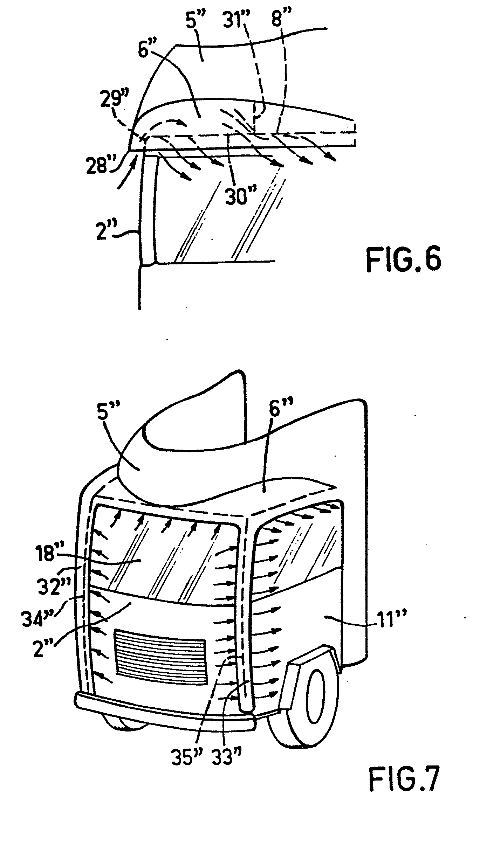

Dans la forme de réalisation 1′ du carénage de l'invention représentée sur la figure 5, les bords de fuite verticaux arrière 20′ des parties latérales 10′ du déflecteur 5′ du carénage, par ailleurs identique à celui des figures 1 à 4, ne sont plus dirigés sensiblement parallèlement à l'axe 12′ du véhicule, mais sont, sur la partie de leur hauteur en regard de la cabine 2′, inclinés sur cet axe d'un angle α de préférence compris entre 30 et 90°. Grâce à cet agencement, les parties latérales 10′ peuvent mieux jouer leur rôle de déflecteur avec un vent relatif oblique.

Dans la forme de réalisation 1″ du carénage de l'invention représenté sur la figure 6, l'élément 6″ est disposé légèrement au-dessus du toit 8″ de la cabine 2″, le bord frontal 28″ de l'élément 6″ s'étendant sensiblement au-delà de l'arête frontale avant 29″ du toit 8″, et ce, aussi bien vers le bas que vers l'avant de la cabine 2″.

Ainsi, un passage d'air est ménagé entre ce toît 8″ et l'intérieur de l'élément 6″, l'air pénétrant par l'intervalle ménagé entre le bord frontal 28″ de l'élément 6″ et l'arête frontale supérieure 29″ de la cabine 2″, pour ressortir latéralement par les intervalles ménagés entre les bords longitudinaux (26″) de l'élément 6″ et les arêtes latérales supérieures 30″ de la cabine 2″, suivant les flèches représentées sur la figure. Il en résulte une circulation d'air complémentaire provoquant un soufflage de l'écoulement sur les surfaces latérales du véhicule, réduisant ainsi avantageusement les décollements de cet écoulement sur ces surfaces, lorsque la cabine possède un profil vu de dessus particulièrement anguleux. On notera qu'on peut améliorer cette circulation complémentaire en disposant, entre le toit 8″ et les extrados de l'élément 6″, des plaques d'étanchéité 31″.

On peut également, dans ce dernier cas, conformément à la figure 7, adjoindre au déflecteur 5″ et à l'élément 6″ deux aubages 32″ et 33″ s'étendant respectivement le long des deux arêtes frontales verticales 34″ et 35″ de la cabine 2″, et à une courte distance de ces arêtes. Les passages ménagés entre ces aubages et la cabine, associés à ceux qui sont ménagés entre l'élément 6″ et le toit de la cabine, permettent un excellent guidage de l'air, suivant les flèches de la figure, de la surface frontale avant 18″ vers les surfaces longitudinales latérales 11″ de la cabine.

Les divers exemples de réalisation du carénage de l'invention, représentés sur le dessin, sont formés d'une seule pièce obtenue par moulage. D'autres procédés de formage peuvent cependant être également utilisés, sans sortir pour autant du cadre de la présente invention. On a également représenté sur le dessin un véhicule porteur. Mais l'invention n'est pas non plus limitée à ce type de véhicule et s'applique tout aussi bien aux véhicules tracteurs de tous genres. Enfin, ces différentes formes de réalisation du carénage de l'invention sont rapportées sur la cabine, mais il est clair qu'on pourrait en imaginer d'autres d'une seule pièce avec la cabine.

**Revendications**

1. Carénage pour cabine (2) de véhicules lourds ayant un maître-couple inférieur à celui de la carrosserie de la charge transportée (4), comportant un déflecteur (5) d'écoulement d'air rigide et formé d'une partie avant (7) et de deux parties arrière latérales (10), caractérisé par le fait qu'il est ouvert vers le haut et qu'il comporte un élément (6) agencé pour coopérer avec le toît (8) de la cabine (2) et raccordé à la partie avant (7) du déflecteur (5), cet élément (6) comportant des parties latérales (24), qui ont longitudinalement la forme d'un extrados, et une partie frontale (28″), qui s'étend au moins jusqu'au niveau de l'arête frontale avant (29″) du toît (8) de la cabine (2), aussi bien vers le bas que vers l'avant de la cabine (2).

2. Carénage selon la revendication 1, dans lequel les parties longitudinales latérales (24) du dit élément (6) ont un profil frontal sensiblement demi-elliptique.

3. Carénage selon l'une des revendications 1 et 2, dans lequel le dit élément (6) est raccordé à la partie avant (7) du dit déflecteur (5) par un raccordement (16) du type "Karman".

4. Carénage selon l'une des revendications 1 à 3, dans lequel les deux parties arrière latérales (10) du déflecteur (5) prolongent les surfaces latérales (11) de la cabine (2) suivant un gabarit frontal transversal sensiblement égale à celui de la caisse (4).

5. Carénage selon la revendication 4, dans lequel la partie avant (7) du déflecteur (5) se prolonge latéralement jusqu'aux dites parties arrière (10) suivant un gabarit frontal transversal sensiblement égal à celui de la caisse (4).

6. Carénage selon l'une des revendications 1 à 5, dans lequel la partie avant (7) du dit déflecteur (5) a une forme sensiblement elliptique dans un plan de coupe horizontal.

7. Carénage selon l'une des revendications 1 à 6, dans lequel le bord supérieur (14) de la partie avant (7) du déflecteur (5) s'élève progressivement du milieu vers les côtés latéraux et de l'avant vers l'arrière sensiblement jusqu'au niveau de la surface longitudinale supérieure (15) de la caisse (4).

8. Carénage selon l'une des revendications 1 à 7, dans lequel les bords de fuite verticaux arrière (20) des dites parties latérales arrière (10) du dit déflecteur (5) sont inclinés vers l'extérieur par rapport au plan médian de la cabine.

9. Carénage selon l'une des revendications 1 à 8, dans lequel la partie frontale (17) du dit élément (6) prolonge tangentiellement la surface frontale avant (18) de la cabine (2).

10. Carénage selon la revendication 9, dans lequel le profil supérieur longitudinal (26) de chacune des dites parties latérales (24) du dit élément (6) prolonge dans un plan horizontal la surface frontale (18) de la cabine (2) suivant une courbe continue régulière (27).

11. Carénage selon l'une des revendications 1 à 8, dans lequel le dit élément (6″) est disposé légèrement au-dessus du toît (8″) de la cabine (2″), le bord frontal (28″) de l'élément (6″) s'étendant sensiblement au-delà de l'arête frontale avant (29″) du toît (8″) de la cabine (2″), aussi bien vers le bas que vers l'avant de la cabine.

12. Carénage selon la revendication 11, dans lequel deux aubages (32″) s'étendent respectivement le long des deux arêtes frontales verticales (34″, 35″) de la cabine (2″), à une courte distance de ces dernières.

13. Carénage selon l'une des revendications 11 et 12, dans lequel des plaques d'étanchéité (31″) sont disposées entre le toît (8″) de la cabine (2″) et la surface inférieure des parties latérales du dit élément (6″).

14. Carénage selon l'une des revendications 1 à 13, dans lequel les bords longitudinaux (26) des parties longitudinales latérales (24) du dit élément (6) sont recouverts par des fuseaux longitudinaux.

## Claims

1. Fairing for the cab (2) of a heavy transport vehicle, having a maximum cross-section smaller than that of the body of the load transported, comprising an air-flow deflector (5) rigid and formed by a front part (7) and two lateral rear parts (10), characterized in that it is open upwards and it comprises an element (6) adapted to cooperate with the roof (8) of the cab (2) and connected to the front part (7) of the deflector (5), this element (6) comprising lateral parts (24) which, longitudinally, have substantially the form of an upper surface of a wing, and a frontal part (28″) which extends to at least the level of the front transverse edge of the roof (8) of the cab (2), both downwardly and forwardly of the cab (2).

2. Fairing according to Claim 1, wherein the lateral longitudinal parts (24) of said element (6) have a substantially semi-elliptical front profile.

3. Fairing according to one of claims 1 and 2, wherein said element (6) is connected to the front part (7) of said deflector (5) by a connection (16) of the "Karman" type.

4. Fairing according to one of claims 1 to 3, wherein the two lateral rear parts (10) of the deflector (5) extend the lateral surfaces (11) of the cab (2) in accordance with a frontal transverse template substantially equal to that of the trailer body (4).

5. Fairing according to claim 4, wherein the front part (7) of the deflector (5) extends laterally up to said rear parts (10) in accordance with a frontal transverse template substantially equal to that of the trailer body (4).

6. Fairing according to one of claims 1 to 5, wherein the front part (7) of said deflector (5) has a substantially elliptical form in a horizontal section.

7. Fairing according to one of Claims 1 to 6, wherein the upper edge (14) of the front part (7) of the deflector (5) rises progressively from the centre towards the lateral sides and from the front towards the rear substantially to the level of the upper longitudinal surface (15) of the trailer body (4).

8. Fairing according to one of Claims 1 to 7, wherein the vertical rear trailing edges (20) of said rear lateral parts (10) of said deflector (5) are inclined outwards with respect to the median plane of the cab.

9. Fairing according to one of Claims 1 to 8, wherein the front part (17) of said element (6) tangentially extends the front transverse surface (18) of the cab.

10. Fairing according to Claim 9, wherein the upper longitudinal profile (26) of each of said lateral parts (24) of said element (6) extends in a horizontal plane the front surface (18) of the cab (2) along a regular continuous curve (27).

11. Fairing according to one of Claims 1 to 8, wherein said element (6″) is disposed slightly above the roof (8″) of the cab (2″), the front edge (28″) of the element (6″) extending substantially beyond the front transverse edge (29″) of the roof (8″) of the cab (2″), both downwardly and forwardly of the cab.

12. Fairing according to Claim 11, wherein two panels (32″) extend respectively along the two vertical front edges (34″, 35″) of the cab (2″), at a short distance therefrom.

13. Fairing according to one of Claims 11 and 12, wherein sealing plates (31″) are disposed between the roof (8″) of the cab (2″) and the lower surface of the lateral parts of said element (6″).

14. Fairing according to one of Claims 1 to 13, wherein the longitudinal edges (26) of the lateral longitudinal parts (24) of said element (6) are covered with longitudinal tapers.

## Patentansprüche

1. Verkleidung für eine Lastwagenkabine (2), deren Hauptspant unterhalb dem der Karrosserie der transportierten Ladung (4) liegt, mit einem starren Luftstromablenkungskörper (5), der aus einem Vorderteil (7) und zwei hinteren Seitenteilen (10) gebildet ist, dadurch gekennzeichnet, daß sie nach oben offen ist und daß sie ein Element (6) enthält, das so ausgebildet ist, daß es mit dem Dach (8) der Kabine (2) zusammenwirkt und an dem Vorderteil (7) des Ablenkungskörpers (5) angebracht ist, wobei dieses Element (6) Seitenteile (24) aufweist, die in Längsrichtung die Form einer Flügeloberseite haben, sowie einen Frontteil (28″), der sich mindestens zum Niveau der vorderen Kante (29″) des Daches (8) der Kabine (2) erstreckt, sowie auch nach dem Boden und nach der Frontseite der Kabine (2).

2. Verkleidung nach Anspruch 1, in der die längsverlaufenden Seitenteile (24) des Elementes (6) ein im wesentlichen halb-elliptisches stirnseitiges Profil haben.

3. Verkleidung nach einem der Ansprüche 1 und 2, in der das Element (6) an dem Vorderteil (7) des Ablenkungskörpers (5) durch eine Befestigung des Typs "Karman" angebracht ist.

4. Verkleidung nach einem der Ansprüche 1 bis 3, in der die beiden hinteren Seitenteile (10) des Ablenkungskörpers (5) die Seitenflächen (11) der Kabine (2) entsprechend einer stirnseitigen, querverlaufenden Schablone verlängern, die im wesentlichen gleich der des Wagenkastens (4) ist.

5. Verkleidung nach Anspruch 4, in der sich der Vorderteil (7) des Ablenkungskörpers (5) seitlich bis zu den hinteren Teilen (10) verlängert, entsprechend einer stirnseitigen, querverlaufenden Schablone, die im wesentlichen gleich der des Wagenkastens (4) ist.

6. Verkleidung nach einem der Ansprüche 1 bis 5, in der der Vorderteil (7) des Ablenkungskörpers (5) in einer horizontalen Schnittebene im wesentlichen eine elliptische Form hat.

7. Verkleidung nach einem der Ansprüche 1 bis 6, in der sich der obere Rand (14) des Vorderteiles (7) des Ablenkungskörpers (5) von der Mitte zu den Seiten hin und von vorne nach hinten hin zunehmend erhebt im wesentlichen bis zum Niveau der längsverlaufenden Oberfläche (15) des Wagenkastens (4).

8. Verkleidung nach einem der Ansprüche 1 bis 7, in der die vertikalen Hinterkanten (20) der hinteren Seitenteilen (10) des Ablenkungskörpers (5) gegenüber der Mittelebene der Kabine nach Außen geneigt sind.

9. Verkleidung nach einem der Ansprüche 1 bis 8, in der die Frontpartie (17) des Elementes (6) die vordere Stirnseite (18) der Kabine (2) tangential verlängert.

10. Verkleidung nach Anspruch 9, in der das obere längsverlaufende Profil (26) jedes der Seitenteile (24) des Elementes (6) die Stirnseite (18) de Kabine (2) in einer horizontalen Ebene gemäß einer regulären stetigen Kurve (27) verlängert.

11. Verkleidung nach einem der Ansprüche 1 bis 8, in der das Element (6″) geringfügig oberhalb des Daches (8″) der Kabine (2″) angeordnet ist, wobei sich die Vorderkante (28″) des Elementes (6″) im wesentlichen über die vordere Stirnkante (29″) des Daches (8″) der Kabine (2″) hinaus erstreckt sowie nach dem Boden und nach der Frontseite der Kabine.

12. Verkleidung nach Anspruch 11, in der zwei Leitschaufeln (32″) sich entsprechend längs der beiden vertikalen vorderen Kanten (34″, 35″) der Kabine (2″) erstrecken und zwar in einem geringen Abstand zu letzteren.

13. Verkleidung nach den Ansprüchen 11 und 12, in der zwischen dem Dach (8″) der Kabine (2″) und der unteren Oberfläche der Seitenteile des Elementes (6″) Dichtungsplatten (31″) angeordnet sind.

14. Verkleidung nach einem der Ansprüche 1 bis 13, in der die längsverlaufenden Ränder (26) der langestreckten Seitenteile (24) des Elementes (6) durch langgestreckte spindelförmige Teile bedeckt sind.

FIG.1

FIG.2

0 005 095

FIG.3

FIG.4

FIG.5

FIG.6

FIG.7